Europäisches Patentamt

European Patent Office

Office européen des brevets

(11) Publication number: **0 182 780**

**B1**

(12) **EUROPEAN PATENT SPECIFICATION**

(45) Date of publication of patent specification: **02.11.89**

(51) Int. Cl.⁴: **H 04 M 11/04**

(21) Application number: **83902763.8**

(22) Date of filing: **23.08.83**

(86) International application number:
**PCT/SE83/00296**

(87) International publication number:
**WO 85/01169 14.03.85 Gazette 85/07**

(54) **ENTRANCE TELEPHONE INSTALLATION AND METHOD, FOR TRANSMISSION OF ALARM SIGNALS.**

(43) Date of publication of application:
**04.06.86 Bulletin 86/23**

(45) Publication of the grant of the patent:
**02.11.89 Bulletin 89/44**

(84) Designated Contracting States:
**DE FR GB**

(56) References cited:
**EP-A-0 021 425**
**GB-A-1 175 969**
**SE-A-82 011 628**
**SE-B- 373 474**
**US-A-3 484 561**
**US-A-3 557 318**
**US-A-3 816 662**
**US-A-4 097 696**
**US-A-4 137 429**

(73) Proprietor: **TRELL, Anders Edvard**
**Polhemsgatan 20 B**
**S-112 36 Stockholm (SE)**

(72) Inventor: **TRELL, Anders Edvard**
**Polhemsgatan 20 B**
**S-112 36 Stockholm (SE)**

(74) Representative: **Norén, Per Bo Arne**
**SWEDPATENT AB P.O. Box 186**
**S-198 00 Balsta (SE)**

Courier Press, Leamington Spa, England.

EP 0 182 780 B1

# Description

The present invention relates to a method for transmission of alarm signals, and is based on utilization of an entrance telephone set system connected to a public automatic subscriber telephone network of the type disclosed in SE-A-373 474. The invention also relates to an entrance telephone installation arranged to facilitate transmission of alarm signals in accordance with the method.

It is previously known to utilize a public subscriber telephone network for transmission of various types of alarm signals, either utilizing continuously switched-through connections, or utilizing mechanically or electronically operated automatic dialling equipment, during alarm condition arranged to facilitate connection via a telephone line to a predetermined subscriber telephone number, e.g. an alarm surveillance centre. An example of a digital dialling system, operative to send a subscriber code and an alarm indication to a remote station via a telephone line, is disclosed in US-A-4 137 429. An automatic alarm transmitting system, which automatically transmits any one of a plurality of alarm conditions via an automatic telephone system is known from GB-A-1 175 969.

SE-A-373 474 discloses how a public telephone network can be used for entrance signalling and door opening purposes. By means of a telephone line from a building, specific entrance calls are switched via the public telephone network to tenants within the building. This is made possible by the use of a device, referred to as "the Number Discriminator", restricting the use to preprogrammed, but otherwise conventional telephone numbers. A common "automatic dialler", which can only dial one or a number of certain preprogrammed telephone numbers, acts as such a discriminator, since calls can only be made to parties dialled by the automatic dialler. However, this is only true, provided that no other conventional methods for dialling are offered to the calling party. A device as indicated above could be denominated as an "active" number discriminator, which by design and programming has been preset with regard to which telephone number to be dialled, based on the way in which the device is addressed. The telephone number dialler is thus only accessable for a visitor by means of a conventional name/signalling panel. When the signalling key for a certain tenant is depressed, or by short number or telephone subscriber number selection from a key set, an "entrance call" is initiated.

The object of the present invention is to disclose how an installation of the above described type also can be utilized for an additional purpose, i.e. transmission of various types of alarm signals, while maintaining previously intended functions.

The previously mentioned number dialler can also be addressed from other locations, and thereby cause connection of other categories of calls. This feature is used according to the present invention in conjunction with an entrance telephone set installation of the type disclosed in the aforementioned SE-A-373 474 for accomplishing transmission of various types of alarm signals.

The present invention relates to a method for transmission of alarm signals by utilization of an entrance telephone installation connected to a public subscriber telephone network and including a selectively addressable telephone number dialling device used for establishing entrance telephone calls with selected tenants via the public subscriber telephone network, and it is mainly characterised in the step of connecting said telephone number dialling device to one or a number of manually or automatically operable alarm indicators, which when operated initiate dialling of predetermined telephone numbers.

The invention also relates to an entrance telephone installation connected to a public subscriber telephone network and including a selectively addressable telephone number dialling device used for establishing entrance telephone calls with selected tenants via the public subscriber telephone network, mainly characterised in that one or a number of manually or automatically operable alarm indicators are connected to said selectively addressable telephone number device included in the entrance telephone installation, which when operated initiate dialling of predetermined telephone numbers.

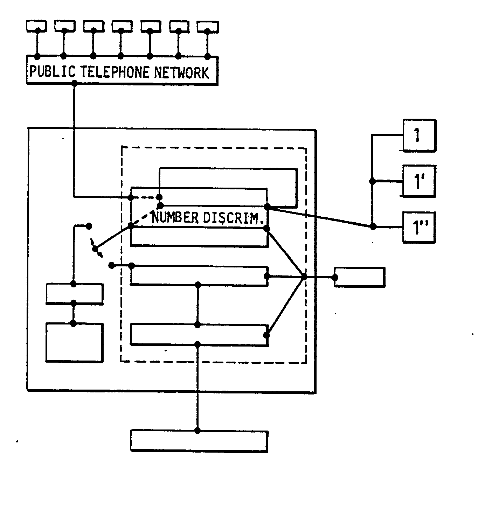

A basic embodiment of an installation of the above described type will now be more fully described with reference to the accompanying drawing.

Said drawing shows a schematical block diagram, which basically corresponds to the block diagram forming a part of previously mentioned Swedish patent. Since included parts are substantially previously known and described in said publication, such previously known parts will not be discussed. However, the block diagram also shows a number of alarm indicators, denominated 1, 1', and 1''. Said alarm indicators are connected to the number discriminator, either directly, or via incoming signal indicating means. The alarm indicators are advantageously arranged having priority, thereby, during alarm conditions, interrupting existing connections, or attempts to establish connection, between the entrance telephone set and subscribers connected to the installation.

As an example, a manually operable alarm indicator could for instance comprise of a pushbutton marked "EMERGENCY" and associated unit for verbal communication. This would offer the possibility of making an emergency call to an emergency alarm centre, If, and where, such a pushbutton should be available, would be a policy question.

A technically and economically more important advantage is related to a different field of use. Most buildings requiring an entrance telephone installation, normally also require alarm installations. By reductions made in the number of employees, such as caretakers, more buildings are now made "unmanned". Lift alarm systems, boiler fault alarm, fire and burglary alarm systems, constitute examples of alarms which require attention, and alarm installations transmitting various types of alarms via the public telephone network to certain recipients, e.g. alarm surveillance centres and security companies, are coming more and more into demand. Presently used types of such installations require access to an outgoing telephone line connected to a telephone exchange, and also some type of automatic dialling equipment, which automatically dials the intended subscriber telephone number, based on which sensing device that has been activated to address same.

A building having an entrance telephone set installation of the type disclosed in the aforementioned SE-A-373 474 has access to an outgoing telephone line and an automatic telephone number dialling device. By a small addition to such an installation, basically only to the cost of discussed various types of sensing devices, such a building receives the ability to transmit alarm signals via the public telephone network. The number of various alarm types can be decided on basis of actual demand, and also on basis of type/location/number of different sensing devices, which are arranged to address the number discriminator to dial and make specific calls/alarms for each sensing device that is influenced.

Certain types of alarms are more suitable than other. As a rule, alarms common for a building, such as for example lift, boiler, burglary and fire alarms, are preferably sent via the outgoing telephone line common for the building, whereas more specific alarms for each tenant, such as e.g. flat burglary alarms, old age people and safety surveillance alarms and similar, are as previously more suited to be transmitted via the various tenants private outgoing telephone lines.

A major advantage is, that lift alarms via the public telephone network makes it possible to establish verbal contact with persons trapped in a lift, and thus possibility to give such persons reassuring information.

## Claims

1. A method for transmission of alarm signals by utilization of an entrance telephone installation connected to a public subscriber telephone network and including a selectively addressable telephone number dialling device used for establishing entrance telephone calls with selected tenants via the public subscriber telephone network, characterised in the step of connecting said telephone number dialling device to one or a number of manually or automatically operable alarm indicators, which when operated initiate dialling of predetermined telephone numbers.

2. A method according to claim 1, characterised in, that dialling of a telephone number, and subsequent connection when an alarm indicator is operated, is given priority in relation to dialling/connection initiated from the entrance telephone set.

3. A method according to claim 1 or 2, characterised in, arranging a verbal communication unit adjacent to a manually operable alarm indicator, connecting said verbal communication unit and alarm indicator to said telephone number dialling device, operation of said manually operable alarm indicator initiating a call to predetermined telephone subscriber and facilitating verbal communication with said subscriber.

4. An entrance telephone installation connected to a public subscriber telephone network and including a selectively addressable telephone number dialling device used for establishing entrance telephone calls with selected tenants via the public subscriber telephone network, characterised in that one or a number of manually or automatically operable alarm indicators are connected to said selectively addressable telephone number device, which when operated initiate dialling of predetermined telephone numbers.

5. An entrance telephone installation as claimed in claim 4, characterised in that dialling of a telephone number, and subsequent connection when an alarm indicator is operated, is given priority in relation to dialling/connection initiated from the entrance telephone set.

6. An entrance telephone installation as claimed in claim 4 or claim 5, characterised in that a verbal communication unit is arranged adjacent to a manually operable alarm indicator, that said verbal communication unit and alarm indicator is connected to said telephone number dialling device, whereby operation of said manually operable alarm indicator is arranged to initiate a call to predetermined telephone subscriber and facilitate establishment of verbal communication with said subscriber.

## Patentansprüche

1. Ein Verfahren zum Übertragen von Alarmsignalen mittels einer Eingangstelefoninstallation, die an ein öffentliches Teilnehmertelefonnetzwerk angeschlossen ist, und mit einem selektiv adressierbaren Telefonnummerwählgerät, das verwendet wird, um Eingangstelefongespräche mit ausgewählten Pächtern über das öffentliche Teilnehmertelefonnetzwerk herzustellen, gekennzeichnet durch den Schritt des Verbindens des Telefonummerwählgerätes mit einem oder einer Anzahl von manuellen oder automatisch betätigbaren Alarmgebern, die bei ihrer Betätigung das Wählen vorbestimmter Telefonnummern veranlassen.

2. Ein Verfahren nach Anspruch 1, dadurch gekennzeichnet, daß das Wählen einer Telefonnummer und die anschließende Verbindung bei Betätigung eines Alarmgebers mit Vorrang geschieht bezüglich des Wählens/der Verbindung auf Veranlassung durch ein Eingangstelefongerät.

3. Ein Verfahren nach Anspruch 1 oder 2, gekennzeichnet durch die Anordnung einer verbalen Kommunikationseinheit neben einem von Hand betätigbaren Alarmgeber, das Verbinden der verbalen Kommunikationseinheit und des Alarmgebers mit dem Telefonnummerwählgerät, die Betätigung des manuell betätigbaren Alarmgebers zum Veranlassen des Anrufs bei dem vorbestimmten Telefonteilnehmer und das Erleichterns der verbalen Kommunikation mit dem Teilnehmer.

4. Eine Eingangstelefoninstallation, die mit einem öffentlichen Teilnehmertelefonnetzwerk verbunden ist und ein selektiv adressierbares Telefonnummernwählgerät aufweist, das verwendet wird, um Eingangstelefongespräche mit ausgewählten Pächtern über das öffentliche Teilnehmertelefonnetzwerk herzustellen, dadurch gekennzeichnet, daß ein oder eine Mehrzahl von von Hand oder automatisch betätigbaren Alarmgeber(n) verbunden ist/sind mit dem selektiv adressierbaren Telefonnummernwählgerät, das bei seiner Betätigung das Wählen von vorbestimmten Telefonnummern veranlaßt.

5. Eine Eingangstelefoninstallation nach Anspruch 4, dadurch gekennzeichnet, daß das Wählen einer Telefonnummer und die anschließende Verbindung bei Betätigung eines Alarmgebers mit Vorrang geschieht bezüglich des Wählens/ der Verbindung auf Veranlassung durch ein Eingangstelefongerät.

6. Eine Eingangstelefoninstallation nach Anspruch 4 oder 5, dadurch gekennzeichnet, daß eine verbale Kommunikationseinheit nahe des von Hand betätigbaren Alarmgebers angeordnet ist, daß die verbale Kommunikationseinheit und der Alarmgeber mit dem Telefonnummernwählgerät verbunden sind, wodurch eine Betätigung des von Hand betätigbaren Alarmgebers angeordnet ist, un einen Telefonanruf bei einem vorbestimmten Telefonteilnehmer zu veranlassen und um die Erzeugung einer verbalen Kommunikation mit dem Teilnehmer zu erleichtern.

**Revendications**

1. Procédé de transmission de signaux d'alarme par utilisation d'un poste téléphonique relié à un réseau téléphonique public et incluant un dispositif de numérotation adressable sélectivement, utilisé pour établir des appels téléphoniques avec des abonnés sélectionnés à travers le réseau public, caractérisé par une étape de connexion du dispositif de numérotation à un ou plusieurs indicateurs d'alarme manuels ou automatiques qui, lorsqu'ils sont activés, composent des numéros de téléphone présélectionnés.

2. Procédé selon la revendication 1, caractérisé en ce que la composition d'un numéro de téléphone et la connexion subséquente, lorsqu'un indicateur d'alarme est activé, donne une priorité de composition/connexion à partir du poste téléphonique.

3. Procédé selon l'une des revendication 1 ou 2, caractérisé en ce que, une unité de communication verbale est disposée adjacente à un indicateur d'alarme, l'unité de communication verbale et l'indicateur d'alarme étant connectés au dispositif de numérotation, la manoeuvre de l'indicateur d'alarme manuel déclenchant un appel de l'abonné prédéterminé et facilitant la communication verbale avec ledit abonné.

4. Une installation de raccordement téléphonique connectée au réseau public et incluant un dispositif de composition de numéros de téléphone, utilisée pour effectuer des appels téléphoniques avec des abonnés sélectionnés à travers le réseau public, caractérisée en ce que un ou plusieurs indicateurs d'alarme, commandés manuellement ou automatiquement, sont connectés audit dispositif de numérotation qui, lorsqu'il est actionné, compose les numéros présélectionnés.

5. Une installation de raccordement téléphonique selon la revendication 4, caractérisée en ce que la composition d'un numéro téléphonique et la connexion subséquente, lorsqu'un indicateur d'alarme et actionné, donne la priorité de la relation composition/connexion à partir du poste.

6. Une installation de raccordement téléphonique selon la revendication 4 ou 5, caractérisée en ce qu'une unité de communication verbale est disposée au voisinage de l'indicateur d'alarme, ladite unité de communication verbale et l'indicateur d'alarme étant connectés au dispositif de composition, l'actionnement de l'indicateur d'alarme manuel provoquant un appel d'un abonné déterminé et facilitant l'établissement de la communication verbale avec ledit abonné.